# EUROPEAN PATENT SPECIFICATION

(11) **EP 0 883 514 B1**
(45) Date of publication and mention of the grant of the patent: **11.08.1999**
(21) Application number: 96910175.7
(22) Date of filing: 15.04.1996
(51) Int. Cl.: B60P 3/22, B65D 88/74

(54) **SYSTEMS AND MEANS FOR ELECTRICALLY HEATING TANKS ESPECIALLY THOSE CARRIED BY MOTOR VEHICLES, HEAT BEING DIFFUSED BY RADIATION**
VERFAHREN UND EINRICHTUNG FÜR ELEKTRISCH BEHEIZBARE TANKS, INSBESONDERE FÜR TANKWAGEN, MIT STRAHLUNGSHEIZUNG
SYSTEMES ET DISPOSITIFS DE CHAUFFAGE ELECTRIQUE DE CITERNES, NOTAMMENT DE CITERNES PORTEES PAR DES VEHICULES A MOTEUR, PAR DIFFUSION THERMIQUE RAYONNANTE

(30) Priority: 05.03.1996 IT MI960427
(43) Date of publication of application: 16.12.1998
(73) Proprietor: CADIF S.R.L., 36100 Verona (IT)
(72) Inventor: STABILE, Aldo, I-26013 Crema (IT)
(74) Representative: Filippi, Remo
(86) International application number: IT9600072
(87) International publication number: WO9732748

(56) References cited:
- EP-A- 0 256 292
- EP-A- 0 381 272
- WO-A-95/22236
- DE-A- 3 411 358
- GB-A- 550 433
- GB-A- 811 336
- GB-A- 1 159 929
- GB-A- 2 155 601
- US-A- 3 280 301
- US-A- 5 133 041

## Description

The invention concerns systems and means for transporting liquids.

In common use are vehicles such as tank trucks, and tank wagons consisting respectively of road trucks or rail wagons that carry a tank for transporting liquids.

A motor vehicle for this purpose generally consists of a truck, without a body, carrying a tank and its accessories that occupy the place of the truck's body.

The tank and accessories comprise the tank itself, of an oval cross section with its longer axis laid horizontally, and of a base structure.

The whole is fixed to the lateral frame members of the truck.

A manhole permits access to the inside and is also used for loading.

Tank trailers consist of a chassis complete with axles and of a tank with accessories as described above.

In the case of rail wagons the tank may be fixed to the chassis or be moveable.

In all cases it is nearly always necessary to keep the liquid in the tank at a substantially constant temperature, ranging between 20° and 250°, notwithstanding heat losses and irregularity caused by the greatly varying speeds at which the vehicle travels and any sudden changes in atmospheric temperatures.

Systems at present in use involve considerable problems of installation since their cost is high if they are to be really efficient and capable of temperature regulation requiring sophisticated, complex and delicate devices.

Just because of these necessary characteristics, reliability over a period of time cannot always be guaranteed; this sometimes means serious damage and, if the product carried deteriorates, financial loss since the quantity is large and the product often expensive.

The patent application WO 95/22236 which represents the closest prior art according to most features of the preamble of claim 1 discloses a means of generating heat converting electric energy into thermal energy by passing electric current through a highly conducting body, such as copper and aluminium, the thickness of said body being measurable in microns and the ratio between width of the section and said thickness being extremely high.

By laying said conductors flat on an insulating support practically continuous heat-emitting surfaces can be obtained, heat being emitted by radiation of such high efficiency as to make possible numerous applications both for environmental warmth and for heating solid or liquid bodies.

In the specific case of tanks carried by motor vehicles and also by rail wagons, such heating may be found advantageous both because of the large surface of the heating body and because of high thermal efficiency.

The invention here discribed considerably improves this system making it particularly applicable to warming tanks mounted on vehicles so that the heat in the various parts of the tank may be varied to compensate for any differences of temperature in the liquid due to the great length of the tank, to the effects of motion and of climatic conditions during the journey as will now be explained.

Subject of the invention are a system and means for heating by electricity the liquid contained in a tank mounted on a vehicle, automatically regulating the temperature of the liquid by diffused heat from a continuous two-dimensional electric conducting body of a thickness measurable in microns, of a constant section and extremely high ratio btween geometical extension and thickness, the ends of said body being connected to a motor-driven generator of electric current.

The tank is clad with panels formed of a pair of metal sheets each sheet having an electrically insulating lining on its internal surface.

The continuous conducting body is laid flat on the inner surface of one of said metal sheets to which the second metal sheet matches and is fixed.

Each panel is fitted with a probe to measure the temperature of that part of the liquid corresponding to said panel.

The motor-driven generator is connected to an electronic control unit by a microprocessor in turn electrically connected to one panel or to another.

In fulfilment of an established program, the microprocessor turns electricity on or off to the various panels or adjusts electric power separately from one to another, on the basis of data supplied by each probe from one moment to the next, according to the temperature it is desired to set or maintain for the liquid inside the tank.

The continuous conducting body is advantageously a copper band.

In one preferred type of execution the metal sheets are of aluminium while the insulating coating on the matching surfaces of said sheets is formed by an anodizing process.

The tank can be that carried by a tank truck or by a rail wagon, or by a tank trailer or by other similar vehicles, as the case may be.

The invention offers evident advantages.

In all process concerning transfer of heat, the lower the thermal delta between the heating element and the required temperature for that particular heating purpose (environment, warm air etc.) the greater will efficiency be.

Compared with conventional electric generators of heat (electric elements at extremely high temperatures with very small heat exchanging surfaces) where concentrated heat has to produce diffused heat, the invented system here described operates by transforming electric current directly into diffused heat, efficiency of the installation being extremely high.

By means of the electric drive unit mounted on the vehicle the quanity of energy needed is calculated to one tenth of a degree, from one area to another in the tank containing the liquid product so as to keep the desired temperature constant, and this can be done throughout a possible range of temperature from 20° to 300°C.

This is done by instant adaption to environmental temperature changes caused by climatic conditions and by movement of the vehicle.

In addition installation and running costs are minimum, while reliability and versatility are maximum as is the guarantee against breakdowns and misfunctioning, due to simplicity of the installation, while maintenance costs are negligible.

Characteristics and purposes of the invention will be made still clearer by the following examples of its execution illustrated by diagrammatically drawn figures.
- Fig. 1: Tank truck with the electric panels subject of the invention.
- Fig. 2: The same as Fig.1 with external insulation cladding.
- Fig. 3: Detail of a panel.
- Fig. 4: Diagram to show electrical connections.

The tank truck 10 with tank 11 exhibits five concave electric panels 12 substantially the same; these clad the lower wall of the tank, semi-oval in section, with a short space between one panel and the next.

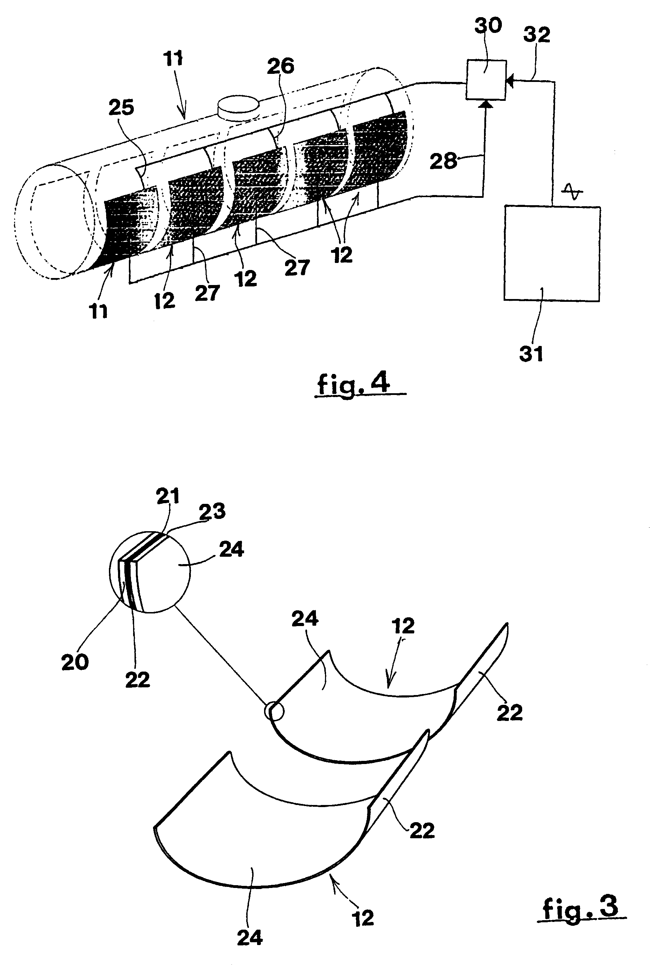

The panels (Fig.3) are formed of a first concave sheet of aluminium 20 clad with an anodized layer 21, on which is laid a thin intermediate copper body 22, whose thickness is measured in microns, and on which is laid a second concave sheet 24 of aluminium on whose matching surface is an anodized layer 23.

Two opposite ends of the intermediate copper bodies 22 on the various panels are connected by a branch connection 25 and electric wire 26 to the electronic drive unit 30.

Each panel carries a temperature probe 27 connected by an electric wire 28 to the drive unit 30.

Therefore, the entire volume of liquid product contained in the tank is divided substantially into five zones each of which is kept under control by one of the above probes.

Temperature values of the volume of liquid checked by each probe are sent from one moment to the next to the drive unit 30.

In accordance with its program and to the temperature values sent to it, the drive unit switches single panels on and off, electrically connecting them to the motor driven generator of electric current 31 through the electric wiring 32 restoring the set optimum temperature values should such values be found to have varied or be about to vary due to dispersion which may take place at various points in the tank as a consequence of the speed at which the vehicle travels or to external climatic conditions.

The drive unit is operated by a microprocessor able to calculate to one tenth of a degree the amount of energy needed, zone by zone, to maintain the temperature at the desired level.

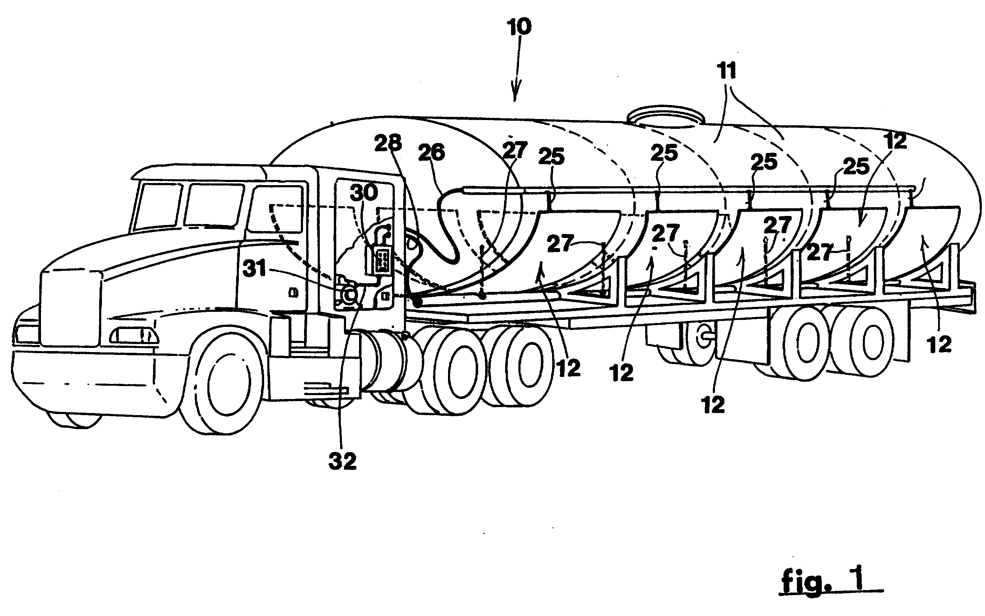

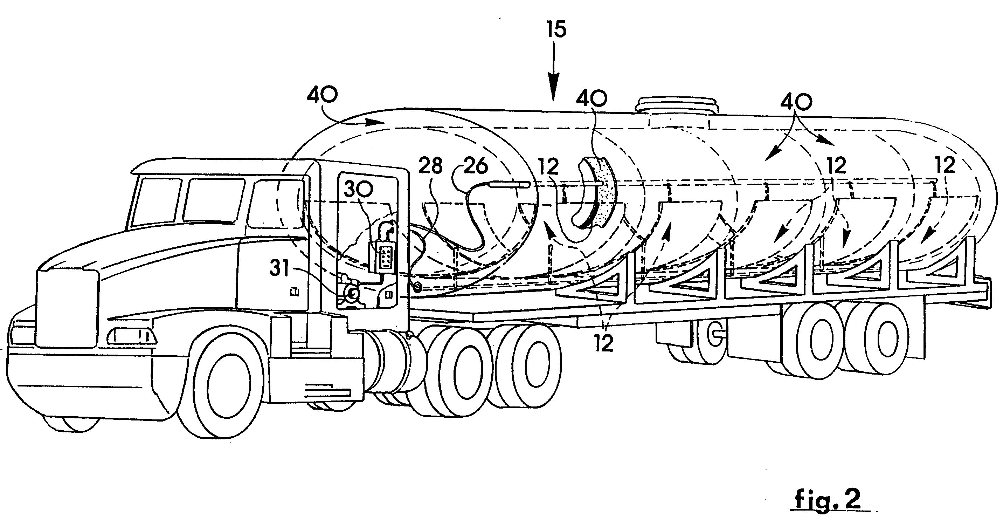

Fig. 2 shows a tank truck 15, substantially the same as that in Fig. 1, the only difference being that it has a coating of insulation 40 on the outside.

## Claims

1. System and means for electrically heating liquid contained in a tank (11) of a vehicle (10) with automatic regulation of the temperature of the liquid and by means of heat diffused from a continuous two-dimensional electric conducting body (22) of a thickness measurable in microns, of a constant section and very high ratio between geometric extension and thickness, with ends connected to a motor-driven generator (31) of electric current,
characterized in that the tank (11) is clad with panels (12) each made of a pair of metal sheets (20, 24), the internal surface of each sheet being electrically insulated, a continuous conducting body (22) being laid flat on the internal surface of one (20) of said metal sheets to which the second sheet (24) matches and is fixed, each panel (12) being provided with a probe (27) to measure the temperature of the area of liquid close to said panel (12), the motor generator (31) being connected by wires (32) to an electronic drive unit (30) with microprocessor in turn electrically connected by wires (25-28) to one or other panel (12), the microprocessor, in accordance with its program, switching the panels (2) on or off or regulating electric power separately of one or the other, based on data supplied, from one moment to the next, by each probe (27), according to the temperature of liquid in the tank (11) to be set or maintained.

2. System and means as in claim 1,
characterized in that the continuous conducting body (22) is a copper band.

3. System and means as in claim 1,
characterized in that the metal sheets (20, 24) are of aluminium and in that the insulation coating (21, 23) on the matching surfaces of said sheets is obtained by an anodizing process.

4. System and means as in claim 1,
characterized in that the tank is that carried on a tanker.

5. System and means as in claim 1,
characterized in that the tank is that carried by a rail wagon.

6. System and means as in claim 1,
characterized in that the tank is that carried by a tank trailer.

## Patentansprüche

1. System und Mittel für die Elektro-Heizung der Flüssigkeit, die in einem Behälter (11) eines Fahrzeugs (10) beinhaltet ist, mit automatischer Temperaturregelung der Flüssigkeit und über Wärmestrahlung aus einem zweidimensionalen kontinuier- lichen, stromleitenden Körper (22), mit einer Stärke in der Ordnung von Mikren bei konstantem Querschnitt, höchstem Verhältnis zwischen der geometrischen Ausdehnung und der Stärke, mit Enden, die einem ElektrostromMotorgenerator (31), angeschlossen sind , dadurch gekennzeichnet, daß der Behälter (11) mit den Tafeln (12) verdeckt wird, wovon jede aus einem Blechpaar (20, 24) gewonnen wird, wobei jedes Paar mit Elektro-Isoliermaterial auf seiner inneren Oberfläche versehen ist, und dadurch daß der kontinuierlich, stromleitende Körper (22) flach auf die Innenoberfläche eines (20) dieser Bleche gelegt worden ist, auf welche das weite Blech (24) zum zusammen-stossen gebracht und festgemacht wird, dadurch daß jede Tafel (12) mit einer Sonde (27) zur Temperaturerhebung des Flüssigkeitsbereichs , dem diese Tafel zugeordnet ist, versehen wird, dadurch der Motorgenerator (31) über die Kabel (32) an eine elektronische Zentrale (30) mit Mikroprozessor angeschlossen ist, welche ihrerseits mit den Kabeln (25-28) an eine und an die andere Tafel (12) verbunden ist, wobei der Mikroprozessor auf der Basis eines eingegebenen Programms dafür sorgt, die verschiedenen Tafeln (12), elektrisch ein-und auszuschalten oder deren Elektroleistung unabhängig voneinander, aufgrund der Moment für Moment von den entsprechenden Sonden (27) angegebenen Daten, je nach der Temperatur, die man in der im Behälter (11) enthaltenen Flüssigkeit ansetzen oder aufrechterhalten will, zu regeln.

2. System und Mittel wie unter Anspruch 1)
dadurch gekennzeichnet, daß der kontinuierlich stromleitende Körper (22) ein Kupferband ist.

3. System und Mittel wie unter Anspruch 1)
dadurch gekennzeichnet, daß die Bleche (20, 24) aus Aluminium bestehen und dadurch, daß der Isoliermantel (21, 23) auf den zusammenstossenden Oberflächen der Bleche über ein Anoden-Oxydationsprozeß erhalten wird.

4. System und Mittel wie unter Anspruch 1)
dadurch gekennzeichnet, daß der Behälter der eines Tankwagens ist.

5. System und Mittel wie unter Anspruch 1)
dadurch gekennzeichnet , daß der Behälter der eines Eisenbahnwagens ist.

6. System und Mittel wie unter Anspruch 1)
dadurch gekennzeichnet, daß der Behälter der eines Tankanhängers ist.

## Revendications

1. Système et moyens pour le chauffage électrique du liquide contenu dans le réservoir (11) d'un véhicule (10), avec réglage automatique de la température du liquide et au moyen de chaleur diffusée par un corps conducteur (22) électrique bimensionnel continu d'une épaisseur de l'ordre des microns, à section constante, à rapport très élevé entre l'extension géométrique et l'épaisseur, et dont les extrémités sont reliées à un générateur (31) de courant électrique,
caractérisés par le fait que le réservoir (11) est revêtu de panneaux (12) formés chacun d'un couple de tôles (20, 24) chacune ayant, sur sa surface interne, un revêtement isolant électrique, le corps conducteur (22) continu étant déposé à plat sur la surface interne d'une (20) de ces tôles à laquelle on joint, en la fixant, la seconde tôle (24), chaque panneau (12) étant muni d'une sonde (27) pour le relevé de la température de la une du liquide correspondant à ce panneau (12), le générateur (31) étant relié par des câbles (32) à une centrale (30) électrique avec microprocesseur, eue-même reliée par des câbles (25-28) à l'un et à l'autre des panneaux (12), le microprocesseur devant, selon un programme inséré, activer ou désactiver électriquement les divers panneaux (12) ou en régler la puissance électrique indépendamment l'un de l'autre, sur la base des données fournies, à chaque instant, par les sondes (27) relatives et suivant la température qu'on désire établir ou maintenir dans le liquide que contient le réservoir (11).

2. Système et moyens conformément à la revendication 1), caractérisés par le fait que le corps conducteur (22) continu est un ruban de cuivre.

3. Système et moyens conformément à la revendication 1), caractérisés par le fait que les tôles (20, 24) sont en aluminium et que le revêtement isolant (21, 23) disposé sur les surfaces jointes des tôles est obtenu à l'aide d'un processus d'anodisation.

4. Système et moyens conformément à la revendication 1), caractérisés par le fait que le réservoir est celui d'un camion-citerne.

5. Système et moyens conformément à la revendication 1), caractérisés par le fait que le réservoir est celui d'un wagon ferroviaire.

6. Système et moyens conformément à la revendication 1), caractérisés par le fait que le réservoir est celui d'une remorque-citerne.
